# EUROPÄISCHE PATENTSCHRIFT

(11) **EP 2 589 824 B1**
(45) Veröffentlichungstag und Bekanntmachung des Hinweises auf die Patenterteilung: **22.02.2017**
(21) Anmeldenummer: 12007499.2
(22) Anmeldetag: 03.11.2012
(51) Int. Cl.: F16B 5/00

(54) **PLATTENVERBINDUNG ZUM STOSSSEITIGEN VERBINDEN VON PLATTEN**
Board connection for the edge joining of boards
Liaison de plaques permettant de relier des plaques bout à bout

(30) Priorität: 05.11.2011 DE 102011117741
(43) Veröffentlichungstag der Anmeldung: 08.05.2013
(73) Patentinhaber: Technische Universität Hamburg-Harburg, 21073 Hamburg (DE); TuTech Innovation GmbH, 21079 Hamburg (DE)
(72) Erfinder: Gumpinger, Thomas, 21073 Hamburg (DE); Jonas, Henry, 20148 Hamburg (DE); Krause, Dieter, 21244 Buchholz (DE); Plaumann, Benedikt, 22089 Hamburg (DE)
(74) Vertreter: Henseler, Daniela

(56) Entgegenhaltungen:
- DE-A1- 19 723 429
- US-A- 436 149

## Beschreibung

Die Erfindung betrifft eine Plattenverbindung zum stoßseitigen Verbinden von Platten durch Einsetzen mindestens eines Verbindungselementes in zueinander ausrichtbaren Ausnehmungen der Platten.

Eine gattungsgemäße Plattenverbindung ist aus US 436 149 A bekannt. An den zu verbindenden Platten wird um benachbarte Kanten herum ein scharnierbildendes Verbindungsmaterial befestigt. Das Verbindungsmaterial ist auf besondere Art und Weise eingeschnitten und bildet über die Kanten hinausgehende Schlaufen, durch die ein spiralförmiger Scharnierstift einfügbar ist, der die Platten fest verbindet.

Aus DE 10 2008 044 834 B4 ist eine Plattenverbindung bekannt, mit der Sandwichplatten stirnseitig miteinander verbunden werden können. Dazu wird in mindestens eine der Platten stirnseitig eine Ausnehmung eingebracht, in die ein die Ausnehmung stirnseitig zumindest teilweise abdeckendes, im Querschnitt U-förmiges oder hohles Rechteckprofil eingelassen und fixiert wird. Dieses Profil besitzt auf der im Wesentlichen in der Ebene der Stirnseite der Sandwichplatte angeordneten Seite mindestens eine Durchgangsbohrung. Durch diese wird vom Inneren des Profils aus je eine Schraube eingebracht, die die eine Platte an der anderen befestigt. Die Montage geschieht dabei vorzugsweise durch eine Montageöffnung auf der Plattenoberseite, die mit einem Deckel verschließbar gestaltet sein kann.

Diese konstruktiv lösbare Plattenverbindung hat den Nachteil, dass die bei Belastung auf die Platten einwirkende Kraft nur an wenigen Stellen in das Material eingebracht wird. Um eine einfache Demontage zu ermöglichen, ist es notwendig, die Platten mit wenigen Schrauben zu fixieren, so dass bei Belastung der Verbindung an diesen Stellen dann allerdings Belastungsspitzen entstehen, die ein Verformen oder Ausbrechen der in das Material eingebrachten Schrauben begünstigen. Außerdem besitzen die Schrauben und das vorzugsweise aus Aluminium gefertigte Profil ein beträchtliches Eigengewicht, dass die Verwendbarkeit der Verbindung im Bereich des Leichtbaus einschränkt.

Ein weiterer Nachteil dieser Plattenverbindung ist, dass sie eine Montageöffnung an der Plattenoberseite vorsieht, die zwar abdeckbar gestaltet sein kann, aber dennoch sichtbar bleibt. Da die Verbindung im Bereich des Möbelbaus beispielsweise beim Innenausbau von Schienenfahrzeugen Verwendung finden soll, wäre eine nicht sichtbare Plattenverbindung erstrebenswert.

Alternativ werden im Stand der Technik zwei zu fügende Sandwich-Paneele mit eingeharzten Zapfen und einem Verschraubungselement verbunden. Auch hier zeigen sich die vorgenannten Nachteile, insbesondere dann, wenn die Verbindung lösbar sein soll.

Ausgehend von US 436 149 A ist es daher Aufgabe der Erfindung, eine stoßseitige Plattenverbindung zu schaffen, die bei Belastung die Kraft gleichmäßiger über die Verbindungsfläche verteilt in das Material einbringt.

Diese Aufgabe wird durch die Merkmale des Anspruchs 1 gelöst.

Hierdurch werden auf einfache Art und Weise die Platten verbunden. Die erfindungsgemäße Plattenverbindung weist zudem eine Reihe von Vorteilen auf. Es handelt sich um eine leicht lösbare Verbindung, die mit geringem Montageaufwand und mit bereits einem einzigen Verbindungselement eine gleichmäßige Krafteinleitung in die zu verbindenden Platten gewährleistet. Es werden folglich insbesondere Vorteile einer Klebe- oder Schweißverbindung mit denen einer Schraubverbindung erfindungsgemäß kombiniert.

Die Verbindung, mit der auch Platten unterschiedlicher Werkstoffe verbunden werden können, weist zudem ein sehr günstiges Zugverhalten auf. Sie kann zum einen so dimensioniert werden, dass sie bereits im elastischen Hookschen Bereich großen Belastungen standhält. Zum anderen schließt sich ein großer plastischer Verformungsbereich an, in dem die von den nutförmigen Segmenten berandeten Plattenteile nach und nach auszubrechen beginnen, bevor die Verbindung versagt. In diesem Verformungsbereich kann entsprechend viel Energie absorbiert werden, was zu einem vorteilhaften Versagensverhalten führt.

Außerdem kann die Verbindung im Leichtbau verwendet werden. Beispielsweise können Sandwich-Paneele mit einem Verbindungselement aus zugfestem Kunststoff miteinander verbunden werden. Das zum reinen Materialgewicht zusätzliche Gewicht der Verbindung beschränkt sich auf das Gewicht des Verbindungselements. Vorteilhaft ist, dass auf das Einbringen metallischer Verbindungselemente verzichtet werden kann.

Zudem kann die Plattenverbindung nicht sichtbar sein. Dies ist insbesondere im Möbelbau zum Beispiel bei der Ausgestaltung von Fahrzeugkabinen von Vorteil. Zusammen mit der möglichen Leichtbauweise ergibt sich eine vorzugsweise Verwendung der neuartigen Plattenverbindung im Bereich des Luftfahrtkabineninnenausbaus.

Ist die Sichtbarkeit der Verbindung für die angestrebte Verwendung nicht von Nachteil, kann das Verspannungsfach auch offenliegend gestaltet sein. In diesem Fall können die Ausnehmungen beispielsweise durch Fräsen von der Oberseite oder Unterseite der Platten aus eingebracht werden. Danach kann das Verbindungselement seitlich, d. h. von der Plattenober- oder -unterseite aus, in das Verspannungsfach eingelegt werden. Es ist dann vorteilhaft, wenn die nutförmigen Segmente eine Hinterschneidung aufweisen, so dass das Verbindungselement, wenn es im Verspannungsfach vorgespannt werden soll, in dieser Hinterschneidung liegt und dadurch im Verspannungsfach gehalten wird.

Um eine Spaltfreiheit der Verbindung erreichen zu können, ist außerdem eine Kombination der erfindungsgemäßen Plattenverbindung mit anderen üblichen Führungstechniken, beispielsweise einer Nut-Feder-Verbindung möglich.

Als Verbindungselement wird ein Flachband eingesetzt. Durch eine Wahl des Materials und einer Breite des Flachbandes kann sowohl dessen Eigensteifigkeit für ein Einschieben in das Verspannungsfach positiv beeinflusst werden, als auch seine Zugfestigkeit der jeweiligen Verwendung angepasst werden.

Bei der Plattenverbindung sind die Ausnehmungen bogenförmig ausgebildet, so dass das Verspannungsfach die Form einer fortlaufenden Welle annimmt. Durch die Gleichmäßigkeit dieser Form des Verspannungsfachs wird das Einschieben des Verbindungselements vereinfacht. Vorteilhaft für das Einschieben ist zudem, wenn das Verhältnis von Wellenlänge zu Amplitude der Welle mindestens 5 beträgt. Auch um das Gewicht der Verbindung zu reduzieren, ist ein möglichst großes Verhältnis L / A erstrebenswert. Allerdings nimmt mit zunehmendem Verhältnis L / A die Festigkeit der Verbindung ab, da ein Ausbrechen der von den nutförmigen Segmenten berandeten Plattenstücke begünstigt wird. Ein in dieser Hinsicht optimiertes Verhältnis L / A liegt bei etwa 7.

Vorzugsweise ist die Plattenverbindung mit einem vorgespannten Verbindungselement ausgebildet, das es ermöglicht, über eine auf das Verbindungselement wirkende Zugspannung ein Aneinanderhaften der Platten an ihren Stoßseiten zu verstärken. Durch eine Regulierung der ausgeübten Zugspannung kann nicht nur die Zugfestigkeit der Verbindung, sondern auch ihre Flexibilität beeinflusst werden. In einem leicht gespannten Zustand ist die Verbindung hinreichend flexibel, um Energie, beispielsweise von Schwingungen einer Platte, zu absorbieren. Bei einer erhöhten Zugspannung vermindert sich diese Flexibilität und die Steifigkeit der Verbindung erhöht sich entsprechend.

Für eine Einstellung der Zugspannung kann beispielsweise eine Vorrichtung dienen, die auf einem Schneckentrieb, ähnlich einer Schlauchschelle, beruht. In diesem Fall kann die Vorspannkraft mit einfachen Werkzeugen eingestellt werden. In vielen Anwendungen ist es jedoch wünschenswert, eine definierte Vorspannkraft vorzugeben und für mehrere Verbindungen zu verwenden. Hier bietet sich beispielsweise ein Klemmmechanismus an, der mit Hilfe einer Spannzange auf einen definierten Wert vorgespannt wird.

Um eine Erhöhung der Festigkeit der Plattenverbindung zu erreichen, kann es weiterhin vorteilhaft sein, das Verbindungselement im Verspannungsfach zu fixieren. Dies kann beispielsweise durch Verkleben oder Vergießen, aber auch durch eine lösbare Befestigung geschehen. Diese Fixierung kann alternativ oder in Kombination mit der Verspannung des Verbindungselements ausgeführt werden.

In einer weiteren Ausführungsform kann zwischen den zu verbindenden Platten mindestens eine Dichtung eingelegt sein, um die Plattenverbindung an ihrer Naht abzudichten. Diese Ausführungsform ist vorteilhaft, wenn die Verbindung im Bereich von Sanitäranlagen, insbesondere Nasszellen, eingesetzt werden soll.

Weitere Ausgestaltungen der Erfindung sind der folgenden Beschreibung und den Unteransprüchen zu entnehmen.

Die Erfindung wird nachstehend an Hand der in den beigefügten Abbildungen dargestellten Ausführungsbeispiele näher erläutert.
Fig. 1 zeigt schematisch eine perspektivische Ansicht von zwei Platten mit einem Verbindungselement für eine erfindungsgemäße Plattenverbindung,
Fig. 2 zeigt schematisch einen Schnitt der beiden Platten gemäß Fig. 1,
Fig. 3 zeigt schematisch einen Schnitt einer erfindungsgemäßen Plattenverbindung mit den Platten und dem Verbindungselement gemäß Fig. 1,
Fig. 4 zeigt einen Schnitt eines zweiten Ausführungsbeispiels einer erfindungsgemäßen Plattenverbindung,
Fig. 5 zeigt gemäß einem dritten Ausführungsbeispiel eine perspektivische Ansicht von zwei Platten,
Fig. 6 zeigt ein viertes Ausführungsbeispiel von Platten für eine Plattenverbindung.

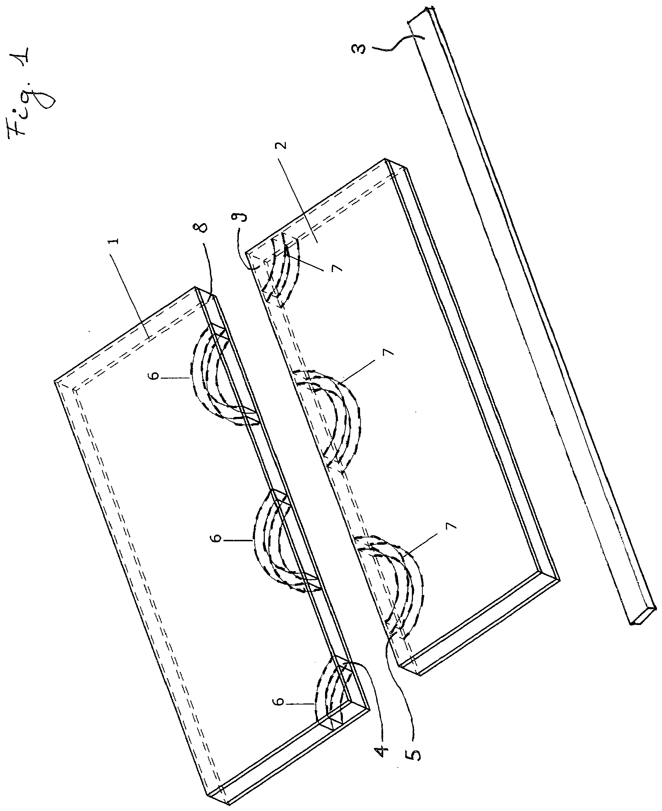

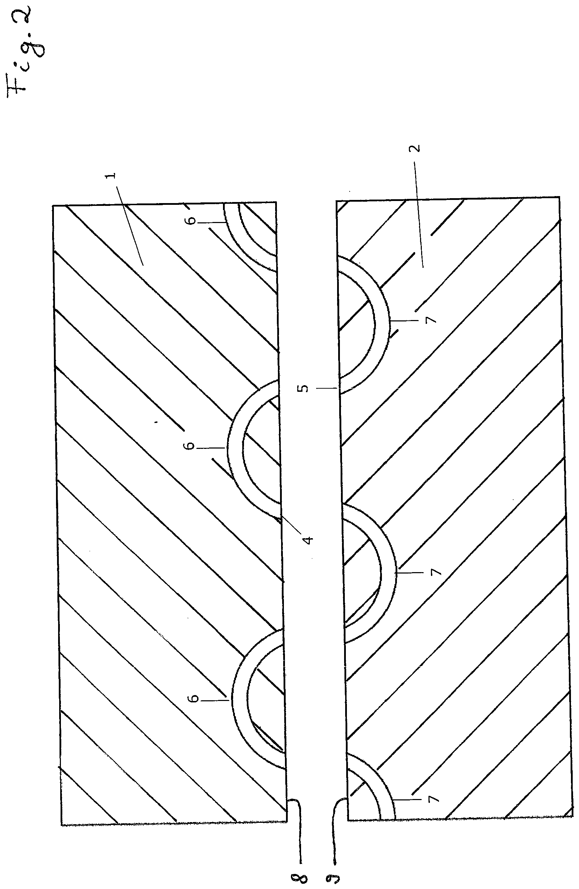

Fig. 1 bis Fig. 3 zeigen eine Plattenverbindung zum stoßseitigen Verbinden von Platten 1, 2 durch Einsetzen mindestens eines Verbindungselementes 3 in zueinander ausrichtbaren Ausnehmungen 4, 5 der Platten 1, 2.

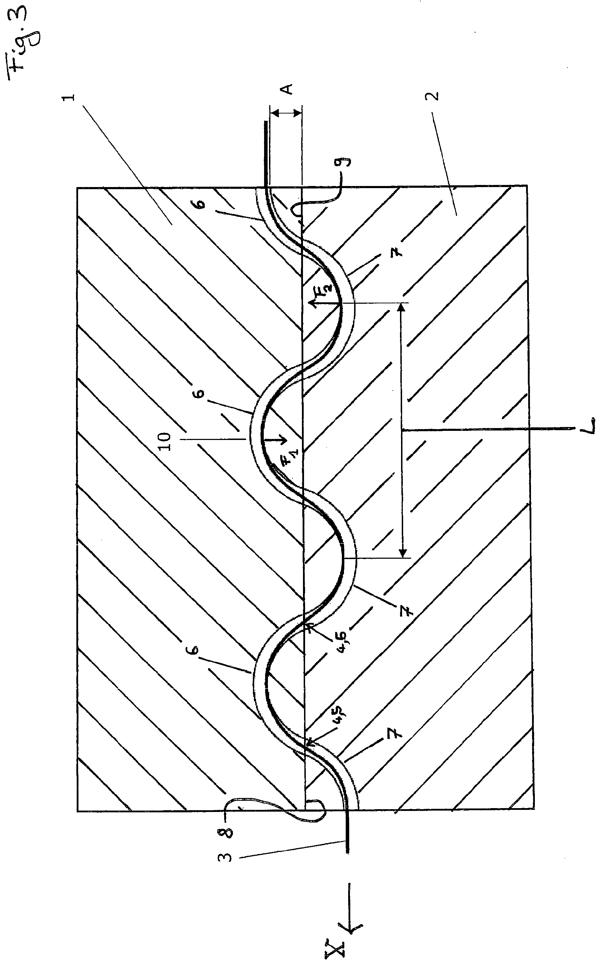

Die Ausnehmungen 4, 5 werden von beabstandet zueinander angeordneten nutförmigen Segmenten 6, 7 gebildet. Die Segmente 6, 7 sind bei einer Stoß 8-an-Stoß 9-Anordnung der Platten 1, 2 aneinander reihbar zu einem zwischen den Platten 1, 2 wechselnden, axial sich erstreckenden Verspannungsfach 10 (vgl. Fig. 3). In das Verspannungsfach 10 ist das Verbindungselement 3 bandartig unter mindestens zweimaligem Umlenken des Kraftflusses F₁, F₂ eines intervallartigen Kraftschlusses einfügbar.

In Fig. 1 sind die Platten 1, 2 für die Verbindung im getrennten Zustand dargestellt. Daraus ist ersichtlich, dass die Segmente 6, 7 an dem Stoß 8, 9 jeweils beginnen und beabstandet zum Beginn enden. Zwischen den einzelnen Segmenten 6,7 der jeweiligen Platte 1,2 liegen Abstandsabschnitte, die der Erstreckung des jeweiligen Segments 6, 7 der jeweils anderen Platte entsprechen. Hierdurch ist es möglich, dass bei einer Stoß 8-an-Stoß 9-Anordnung der beiden Platten 1, 2 die Segmente 6, 7 ein durchgehendes Verspannungsfach 10 bilden, wie dies in Fig. 3 dargestellt ist.

In Fig. 3 sind die nutförmigen Segmente 6, 7 jeweils bogenförmig ausgebildet, so dass die beiden Platten 1, 2 in einer Stoß 8-an-Stoß 9-Anordnung so angeordnet werden können, dass das durchgehende Verspannungsfach 10 die Form einer fortlaufenden Welle hat. In Fig. 3 ist das Verbindungselement 3 in das Verspannungsfach 10 von rechts nach links in Richtung des Pfeils X eingeschoben worden. Das Verbindungselement 3 folgt dabei der Form des Verspannungsfachs 10 und liegt im eingeschobenen Zustand jeweils in den Intervallen um die Scheitelpunkte der Welle an. In diesen Intervallen entsteht der Kraftschluss, wobei sich die Richtung des Kraftflusses F₁, F₂ zwischen benachbarten Segmenten 6, 7 jeweils umkehrt. Die für den Kraftschluss notwendige Normalkraft ergibt sich dabei aus der Rückstellkraft des in Form des Verspannungsfachs verbogenen, eigensteifen Verbindungselements 3.

In dieser Ausgestaltung ist das wellenförmige Verspannungsfach 10 im Querschnitt vorzugsweise größer ausgebildet als das bandartige Verbindungselement 3, wodurch sich die Reibung beim Einschieben des Verbindungselements 3 in das Verspannungsfach 10 verringert. Während des Einschiebens folgt das vordere Ende des Verbindungselementes 3 aufgrund seiner Eigensteifigkeit jeweils dem Außenrand der bogenförmigen Segmente 6, 7. Es muss folglich Biegearbeit aufgebracht werden, um das Verbindungselement 3 einzufügen. Im eingeschobenen Zustand entspannt sich das Verbindungselement 3 so weit wie im Verspannungsfach möglich, so dass es jeweils nur in den Bereichen um die Scheitel der Welle auf der Innenseite der bogenförmigen Segmente 6, 7 anliegt. Hierdurch kommt der intervallartige Kraftschluss zu Stande.

Das in Fig. 3 dargestellte wellenförmige Verspannungsfach 10 besitzt eine Amplitude A und eine Wellenlänge L, durch deren Veränderung eine Parametrisierung der Plattenverbindung möglich ist.

Das Verhältnis von Wellenlänge L zu Amplitude A der Welle des Verspannungsfachs 10 ist vorzugsweise größer gleich 5.

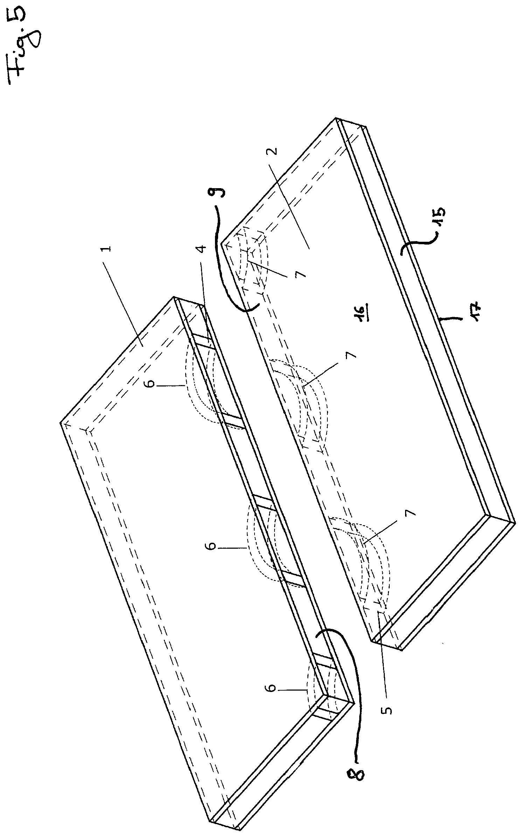

So zeigt beispielsweise Fig. 5 bogenförmige Segmente 6, 7, so dass bei einer Stoß 8-an-Stoß 9-Anordnung der beiden Platten 1, 2 eine fortlaufende Welle, beispielsweise sinusartig, als Verspannungsfach entsteht, deren Amplitude kleiner ist als die der in Fig. 3 dargestellten Amplitude. Über die Wahl der Wellenlänge kann die Anzahl der bogenförmigen Segmente 6, 7 entlang einer wählbaren axialen Erstreckung (Plattenlänge) gewählt werden.

Wie Fig. 1 ferner zeigt, verläuft das Verspannungsfach 10 kanalartig und ist zur Aufnahme eines Verbindungselementes 3 in Form eines Flachbandes ausgebildet. Das Flachband besitzt vorzugsweise eine für ein stirnseitiges Einfädeln, wie vorstehend beschrieben, in das Verspannungsfach 10 hinreichende Eigensteifigkeit.

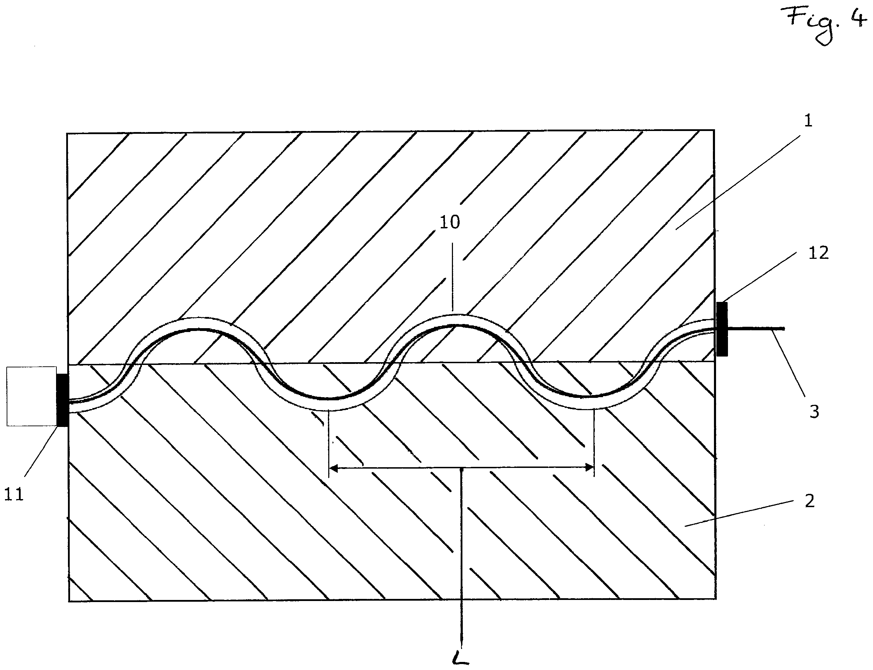

Wie Fig. 4 zeigt, kann das Verbindungselement 3 vorgespannt eingefügt sein. Dazu sind Verspannungsmittel 11, 12 vorgesehen, die hier beispielsweise durch eine axiale Schraubenkraft wirken.

Das in Fig. 3 eingefügt dargestellte Verbindungselement 3 kann lösbar oder unlösbar eingefügt sein. Ferner kann das Verbindungselement 3 stoffschlüssig in das Verspannungsfach 10 eingefügt sein, beispielsweise durch Verkleben, Verschweißen, Vergießen etc. Auch diese stoffschlüssige Verbindung kann lösbar sein, insbesondere dann, wenn sie punktuell ausgeführt ist.

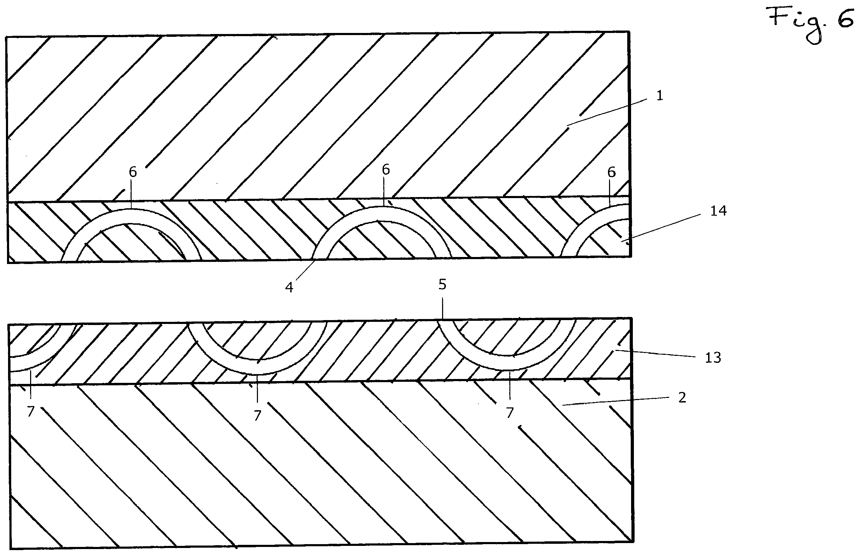

Fig. 6 zeigt ein Ausführungsbeispiel, bei dem die Segmente 6, 7 in einem randseitigen Bereich der Platten 1, 2 angeordnet sind, der aus einem anderen Material 13, 14 besteht als die eigentlichen Platten 1, 2. Die Platten 1, 2 sind üblicherweise Sandwich-Paneele mit vorzugsweise einem Schaum- oder Wabenkern. Das vorgenannte andere Material 13, 14 ist beispielsweise mit einer höheren Festigkeit ausgestattet. Je nach Einsatzgebiet kann als Füllmaterial auch Holz, Mineralien oder andere leichte, schubfeste Füllmaterialien verwendet werden.

Bei dem Sandwich-Material der Platten 1, 2 wird der Kern 15 von Decklagen 16, 17 abgedeckt. Die Einbringung der Segmente 6, 7 kann dann in den Kern 15 erfolgen, bevor die Decklagen aufgebracht, beispielsweise auflaminiert werden. Durch die Decklagen 16, 17 sind die Segmente 6, 7 abgedeckt und damit insoweit äußerlich unsichtbar. Das Material der Decklagen 16, 17 ist angepasst an das Material des Kerns 15 und den Einsatzzweck. Als Decklagen sind auch Furniere aufkaschierbar.

Schließlich kann zwischen den Platten 1, 2 eine Dichtung (nicht dargestellt) eingelegt sein, die die Stoß 8-an-Stoß 9-Anordnung abdichtet.

Verwendung findet die vorstehend beschriebene Plattenverbindung vor allem in der Luftfahrt-Zulieferindustrie, insbesondere für die Herstellung von Küchen, Stauschränken und Toiletten. Dort sind Leichtbauwände aufzubauen, die aus Plattensegmenten üblicherweise zusammengesetzt sind. Die Verbindung solcher Platten kann mit der vorstehend beschriebenen Plattenverbindung erfolgen. Da solche Stellwände häufig technische Geräte verdecken, ist zu deren Wartung erforderlich, dass Teile der Stellwände regelmäßig abzunehmen sind. Besonders hier kommen die Vorteile der beschriebenen Plattenverbindung zum Tragen. Das Verbindungselement, das beispielsweise ein Flachband aus einem Polymerwerkstoff (z.B. Plexiglas) sein kann, führt zu keiner wesentlichen Gewichtserhöhung und ist zudem nach dem Einfügen wiederholt herausziehbar und neu einfügbar.

Als weitere Einsatzgebiete sind hier auch der Messebau und der Möbelbau zu nennen.

## Patentansprüche

1. Plattenverbindung zum stoßseitigen Verbinden von Platten (1, 2) durch Einsetzen mindestens eines Verbindungselementes (3) in zueinander ausrichtbaren Ausnehmungen (4, 5) der Platten (1,2), wobei die Ausnehmungen von beabstandet zueinander angeordneten nutförmigen Segmenten (6, 7) gebildet werden, und die Segmente (6, 7) bei einer Stoß(8)-an-Stoß(9)-Anordnung der Platten (1, 2) aneinander reihbar sind zu einem zwischen den Platten (1,2) wechselnden, axial sich erstreckenden Verspannungsfach (10), in das das Verbindungselement (3) bandartig einfügbar ist, **dadurch gekennzeichnet, dass** die nutförmigen Segmente (6, 7) jeweils bogenförmig berandete Plattenstücke ausbilden und derart aneinander reihbar sind, dass ein kanalartiges Verspannungsfach (10) in Form einer fortlaufenden Welle vorliegt und zur Aufnahme des Verbindungselements (3) in Form eines Flachbandes unter mindestens zweimaligem Umlenken des Kraftflusses (F₁, F₂) eines intervallartigen Kraftschlusses ausgebildet ist.

2. Plattenverbindung nach Anspruch 1, **dadurch gekennzeichnet, dass** das Flachband eine für ein stirnseitiges Einfädeln in das Verspannungsfach (10) hinreichende Eigensteifigkeit besitzt.

3. Plattenverbindung nach Anspruch 1 oder 2, **dadurch gekennzeichnet, dass** der intervallartige Kraftschluss entlang von Scheitelregionen der fortlaufenden Welle wirkt.

4. Plattenverbindung nach einem der Ansprüche 1 bis 3, **dadurch gekennzeichnet, dass** das Verhältnis von Wellenlänge (L) zu Amplitude (A) der Welle des Verspannungsfachs (10) größer gleich 5 ist.

5. Plattenverbindung nach einem der Ansprüche 1 bis 4, **dadurch gekennzeichnet, dass** das Verbindungselement (3) vorgespannt eingefügt ist.

6. Plattenverbindung nach einem der Ansprüche 1 bis 5, **dadurch gekennzeichnet, dass** das Verbindungselement (3) stoffschlüssig in das Verspannungsfach (10) eingefügt ist.

7. Plattenverbindung nach einem der Ansprüche 1 bis 6, **dadurch gekennzeichnet, dass** die Platten (1,2) Sandwich-Paneele mit einem Schaum- oder Wabenkern sind.

8. Plattenverbindung nach einem der Ansprüche 1 bis 7, **dadurch gekennzeichnet, dass** zwischen den Platten (1, 2) eine Dichtung einlegbar ist.

## Claims

1. Panel connection for the abutting connection of panels (1, 2) by insertion of at least one connecting element (3) into mutually alignable recesses (4, 5) of the panels (1, 2), wherein the recesses are formed by spaced-apart, groove-like segments (6, 7) and, when the panels (1, 2) are arranged with one abutment surface (8) against another abutment surface (9), the segments (6, 7) can be lined up in series to form an axially extending bracing compartment (10) which alternates between the panels (1, 2) and into which the connecting element (3) can be inserted in a strip-like manner, **characterized in that** the groove-like segments (6, 7) each form arcuate-bordered panel pieces and can be lined up in series such that a channel-like bracing compartment (10) in the form of a continuous wave is created, and is designed for accommodating the connecting element (3) in the form of a flat strip with the flux of forces (F₁, F₂) of an interval-patterned force locking connection being deflected at least twice.

2. Panel connection according to Claim 1, **characterized in that** the flat strip has an inherent rigidity which is sufficient for it being inserted on the end side into the bracing compartment (10).

3. Panel connection according to Claim 1 or 2, **characterized in that** the interval-patterned force-locking connection acts along vertex regions of the continuous wave.

4. Panel connection according to one of Claims 1 to 3, **characterized in that** the ratio of wavelength (L) to amplitude (A) of the wave of the bracing compartment (10) is greater than or equal to 5.

5. Panel connection according to one of Claims 1 to 4, **characterized in that** the connecting element (3) is inserted in a pretensioned state.

6. Panel connection according to one of Claims 1 to 5, **characterized in that** the connecting element (3) is inserted into the bracing compartment (10) with material bonding.

7. Panel connection according to one of Claims 1 to 6, **characterized in that** the panels (1, 2) are sandwich panels with a foam core or honeycomb core.

8. Panel connection according to one of Claims 1 to 7, **characterized in that** a seal can be placed in position between the panels (1, 2).

## Revendications

1. Liaison de plaques permettant de relier des plaques (1, 2) bout à bout par introduction d'au moins un élément de liaison (3) dans des cavités (4, 5) des plaques (1, 2), les cavités pouvant être alignées les unes avec les autres et étant formées de segments (6, 7) en forme de rainure arrangés à distance les uns des autres, les segments (6, 7) étant juxtaposables selon un arrangement bout (8) à bout (9) des plaques (1, 2) pour former un logement de haubanage (10) s'étendant axialement et alternant entre les plaques (1, 2), dans lequel peut être introduit un élément de liaison (3) en forme de bande, **caractérisée en ce que** les segments (6, 7) en forme de rainure forment respectivement un élément de plaque bordé en forme d'arc et qui peuvent être juxtaposés de manière à former un logement de haubanage (10) en forme de canal selon une ondulation continue pour recevoir l'élément de liaison (3) sous la forme d'une bande plate avec au moins deux changements de direction du flux de force (F1, F2) d'une adhérence par intervalle.

2. Liaison de plaques selon la revendication 1, **caractérisée en ce que** la bande plate présente une rigidité propre appropriée pour un enfilage de front dans le logement de haubanage (10).

3. Liaison de plaques selon la revendication 1 ou 2, **caractérisée en ce que** l'adhérence par intervalle agit le long des régions de sommet de l'ondulation continue.

4. Liaison de plaques selon l'une quelconque des revendications 1 à 3 **caractérisée en ce que** le rapport de la longueur d'onde (L) à l'amplitude (A) de l'ondulation du logement de haubanage (10) est supérieur ou égal à 5.

5. Liaison de plaques selon l'une quelconque des revendications 1 à 4, **caractérisée en ce que** l'élément de liaison (3) est introduit de manière précontrainte.

6. Liaison de plaques selon l'une quelconque des revendications 1 à 5, **caractérisée en ce que** l'élément de liaison (3) est inséré dans le logement de haubanage (10) par engagement de matière.

7. Liaison de plaques selon l'une quelconque des revendications 1 à 6, **caractérisée en ce que** les plaques (1, 2) sont des panneaux sandwich avec un noyau en mousse ou en nid d'abeilles.

8. Liaison de plaques selon l'une quelconque des revendications 1 à 7, **caractérisée en ce qu'**un joint peut être inséré entre les plaques (1, 2).
